(19) Europäisches Patentamt
European Patent Office
Office européen des brevets

(11) **EP 2 274 827 B1**

(12) **EUROPÄISCHE PATENTSCHRIFT**

(45) Veröffentlichungstag und Bekanntmachung des Hinweises auf die Patenterteilung:
**30.03.2016 Patentblatt 2016/13**

(21) Anmeldenummer: **10700859.1**

(22) Anmeldetag: **14.01.2010**

(51) Int Cl.:
*H02M 7/537* (2006.01)   *H02M 7/797* (2006.01)
*H02J 3/01* (2006.01)

(86) Internationale Anmeldenummer:
**PCT/EP2010/050415**

(87) Internationale Veröffentlichungsnummer:
**WO 2010/084077 (29.07.2010 Gazette 2010/30)**

(54) **VERFAHREN ZUM BETRIEB EINER UMRICHTERSCHALTUNG SOWIE VORRICHTUNG ZUR DURCHFÜHRUNG DES VERFAHRENS**

METHOD FOR OPERATING A CONVERTER CIRCUIT, AND APPARATUS FOR CARRYING OUT THE METHOD

PROCÉDÉ POUR FAIRE FONCTIONNER UN CIRCUIT CONVERTISSEUR ET DISPOSITIF POUR LA MISE EN OEUVRE DU PROCÉDÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.01.2009 EP 09150938**

(43) Veröffentlichungstag der Anmeldung:
**19.01.2011 Patentblatt 2011/03**

(73) Patentinhaber: **ABB Schweiz AG**
**5400 Baden (CH)**

(72) Erfinder:
• **RONNER, Beat**
**CH-5242 Birr (CH)**
• **THURNHERR, Tobias**
**CH-5408 Ennetbaden (CH)**

(74) Vertreter: **ABB Patent Attorneys**
**c/o ABB Schweiz AG**
**Intellectual Property CH-IP**
**Brown Boveri Strasse 6**
**5400 Baden (CH)**

(56) Entgegenhaltungen:
• LIU Y ET AL: "Trinary hybrid multilevel inverter used in STATCOM with unbalanced voltages" IEE PROCEEDINGS: ELECTRIC POWER APPLICATIONS, INSTITUTION OF ELECTRICAL ENGINEERS, GB, Bd. 152, Nr. 5, 9. September 2005 (2005-09-09), Seiten 1203-1222, XP006025151 ISSN: 1350-2352
• ZHU P ET AL: "Control scheme for a universal power quality manager in a two-phase synchronous rotating frame" IEE PROCEEDINGS: GENERATION, TRANSMISSION AND DISTRIBUTION, INSTITUTION OF ELECTRICAL ENGINEERS, GB, Bd. 151, Nr. 5, 15. Oktober 2004 (2004-10-15), Seiten 590-596, XP006022985 ISSN: 1350-2360
• PENGCHENG ZHU ET AL: "A Novel Control Scheme for a Unified Power Flow Controller" PES TD 2005/2006 MAY 21-24, 2006, PISCATAWAY, NJ, USA,IEEE, PISCATAWAY, NJ, USA, 21. Mai 2006 (2006-05-21), Seiten 684-692, XP031331127 ISBN: 978-0-7803-9194-9
• ZHANG YONG-GAO ET AL: "Double Closed Loop Control and Analysis for Shunt Inverter of UPFC" PES TD 2005/2006 MAY 21-24, 2006, PISCATAWAY, NJ, USA,IEEE, PISCATAWAY, NJ, USA, 21. Mai 2006 (2006-05-21), Seiten 666-671, XP031331124 ISBN: 978-0-7803-9194-9

• BOZHKO S V ET AL: "Control of Offshore DFIG-Based Wind Farm Grid With Line-Commutated HVDC Connection" IEEE TRANSACTIONS ON ENERGY CONVERSION, IEEE SERVICE CENTER, PISCATAWAY, NJ, US, Bd. 22, Nr. 1, 1. März 2007 (2007-03-01), Seiten 71-78, XP011184061 ISSN: 0885-8969

**Beschreibung**

**Technisches Gebiet**

Die Erfindung bezieht sich auf das Gebiet der Leistungselektronik. Sie geht aus von einem Verfahren zum Betrieb einer Umrichterschaltung sowie einer Vorrichtung zur Durchführung des Verfahrens gemäss dem Oberbegriff der unabhängigen Ansprüche.

**Stand der Technik**

Herkömmliche Umrichterschaltungen umfassen eine Vielzahl an ansteuerbaren Leistungshalbleiterschaltern, welche in bekannter Weise zur Schaltung von mindestens zwei Schaltspannungsniveaus verschaltet sind. Typischerweise ist eine solche Umrichterschaltung mit einem elektrischen Wechselspannungsnetz verbunden, welches insbesondere dreiphasig ausgebildet ist. Solche Umrichterschaltungen werden häufig in Industrieanlagen eingesetzt, wobei die Umrichterschaltungen typischerweise über einen Transformator netzgekoppelt sind und wobei natürlich weitere Einsatzgebiete und Verwendungsmöglichkeiten, wie beispielsweise Windkraftanlagen, denkbar sind.

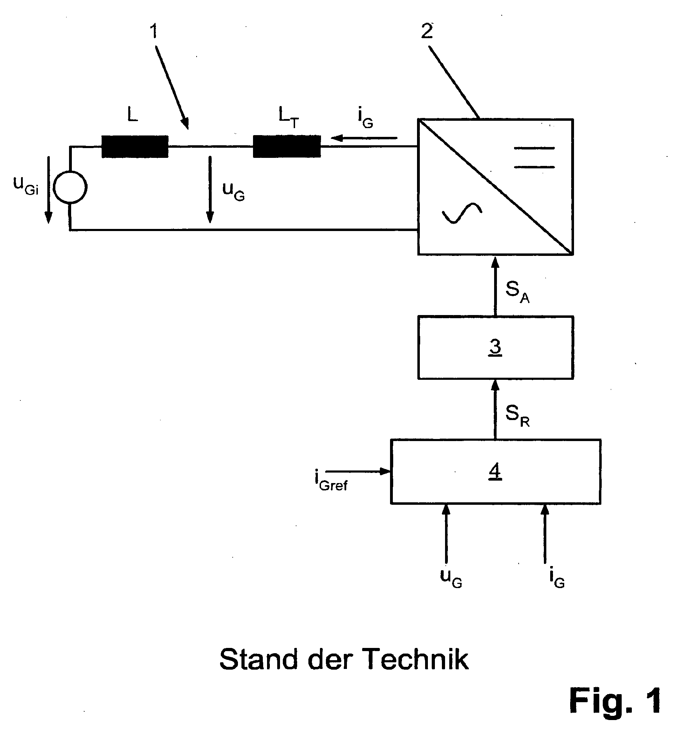

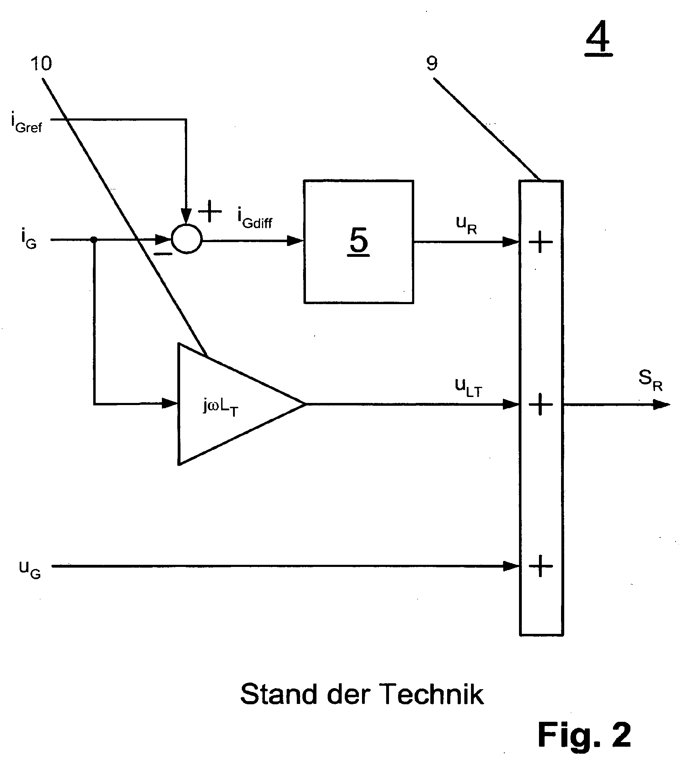

Eine Vorrichtung zum Betrieb einer eingangs erwähnten Umrichterschaltung nach dem Stand der Technik ist in Fig. 1 dargestellt. Darin weist die Umrichterschaltung eine Umrichtereinheit 2 mit einer Vielzahl an ansteuerbaren Leistungshalbleiterschaltern auf, wobei die Umrichtereinheit über einen Transformator mit einem dreiphasigen elektrischen Wechselspannungsnetz 1 verbunden ist. Es sei erwähnt, dass das dreiphasige elektrische Wechselspannungsnetz 1 mit einer dreiphasigen Netzspannung, einem dreiphasigen Netzstrom und einer dreiphasigen Transformatorinduktivitätsspannung in Fig. 1 der Übersichtlichkeit halber als einphasiges Ersatzschaltbild mit einer einphasigen Netzspannung $u_G$, einem einphasigen Netzstrom $i_G$ und einer einphasigen Transformatorinduktivitätsspannung $u_{LT}$ gezeigt ist. Gemäss Fig. 1 weist die Vorrichtung zum Betrieb der Umrichterschaltung eine der Erzeugung eines Regelsignals $S_R$ dienende Regelungsvorrichtung 4 auf, die über eine Ansteuerschaltung 3 zur Bildung eines Ansteuersignals $S_A$ mit den ansteuerbaren Leistungshalbleiterschaltern verbunden ist. Ferner ist in Fig. 2 eine Regelungsvorrichtung 4 nach dem Stand der Technik gezeigt. Gemäss Fig. 2 umfasst die Regelungsvorrichtung 4 eine Summiereinheit 9 zur Bildung des Regelsignal $S_R$ durch Summation einer Reglerspannung $u_R$, einer aus einem Netzstrom $i_G$ gebildeten Transformatorinduktivitätsspannung $u_{LT}$ und einer Netzspannung $u_G$, wobei die Transformatorinduktivitätsspannung $u_{LT}$ aus dem Netzstrom $i_G$ und einer Transformatorinduktivität $L_T$ mittels einer Berechnungseihheit 10 gebildet wird, und wobei die Regelungsvorrichtung 4 eine Reglereinheit 5 zur Bildung der Reglerspannung $u_R$ durch Ausregelung des gefilterten Netzstromes $i_G$ auf einen Netzstromsollwert $i_{Gref}$ aufweist.

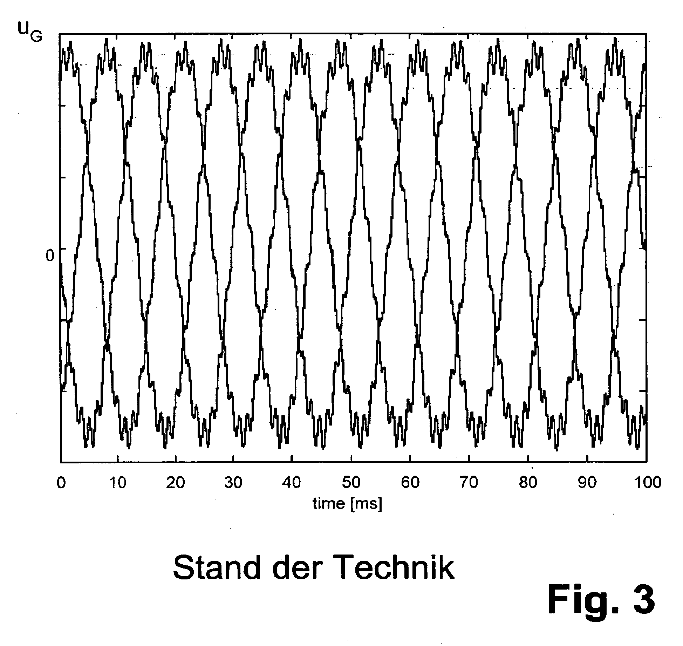

Die vorstehend genannte Vorrichtung zum Betrieb der Umrichterschaltung und das diesbezügliche Verfahren erlauben es zwar den Netzstrom $i_G$ zu regeln, jedoch können in einem elektrischen Wechselspannungsnetz 1 in der Netzspannung $u_G$ Schwingungen oberhalb der Grundfrequenz auftreten, die hochgradig unerwünscht sind und mit der vorstehend beschriebenen Vorrichtung zum Betrieb der Umrichterschaltung und dem diesbezügliche Verfahren nicht gedämpft und damit nicht reduziert werden können. Solche Schwingungen treten vor allem dann auf, wenn das Netz schwach gedämpfte Resonanzstellen aufweist. In Fig. 3 ist ein solcher mit Schwingungen behafteter Verlauf der Netzspannung $u_G$ nach dem Stand der Technik gezeigt.

Eine gattungsgemäße Vorrichtung ist aus der Veröffentlichung "Trinary hybrid multilevel inverter used in STATCOM with unbalanced voltages" von Y. Lia und F.L. Luo, erschienen in IEE Proc. Electr. Power Appl., vol. 152, no. 5, Sep. 2005, bekannt.

**Darstellung der Erfindung**

Aufgabe der Erfindung ist es deshalb, ein Verfahren zum Betrieb einer Umrichterschaltung anzugeben, mittels welchem unerwünschte Schwingungen in der Netzspannung oberhalb der Grundfrequenz eines mit der Umrichterschaltung verbundenen elektrischen Wechselspannungsnetzes gedämpft bzw. reduziert werden kann. Ferner ist es die Aufgabe der Erfindung, eine Vorrichtung anzugeben, mit der das Verfahren in besonders einfacher Weise durchgeführt werden kann.

Diese Aufgaben werden durch die Merkmale des Anspruchs 1 bzw. des Anspruchs 7 gelöst. In den abhängigen Ansprüchen sind vorteilhafte Weiterbildungen der Erfindung angegeben.

Die Umrichterschaltung weist eine Umrichtereinheit mit einer Vielzahl an ansteuerbaren Leistungshalbleiterschaltern auf und ist über einen Transformator mit einem dreiphasigen elektrischen Wechselspannungsnetz verbunden. Beim erfindungsgemässen Verfahren zum Betrieb der Umrichterschaltung werden nun die ansteuerbaren Leistungshalbleiterschalter mittels eines aus einem Regelsignal gebildeten Ansteuersignals angesteuert. Erfindungsgemäss wird zunächst ein gefilterter Netzstrom durch Filterung nach einer Tiefpasscharakteristik eines Netzstromes, eine gefilterte Transformatorinduktivitätsspannung durch Filterung nach einer Tiefpasscharakteristik einer aus dem Netzstrom gebildeten Transformatorinduktivitätsspannung und eine gefilterte Netzspannung durch Filterung nach einer Tiefpasscharakteristik einer Netzspannung gebildet. Desweiteren wird das Regelsignal durch Summation einer Reglerspannung, der gefilterten Transformatorinduktivitätsspannung und der gefilterten Netzspannung gebildet, wobei die Reglerspannung durch Ausregelung des gefilterten Netzstromes auf einen Netzstromsollwert gebildet wird. Durch diese Massnahmen werden Schwingungen in der Netzspannung oberhalb der Grundfrequenz gedämpft und damit vorteilhaft reduziert. Die vorstehend genannten Filterungen nach einer Tiefpasscharakteristik finden insbesondere in einem mit der Grundfrequenz der Netzspannung rotierenden System statt, wobei dann die Grundschwingung der Netzspannung in diesem System als Gleichanteil erscheint, so dass die Grundfrequenz der Netzspannung durch die Filterungen nach einer Tiefpasscharakteristik gemäss dem erfindungsgemässen Verfahren vorteilhaft nicht beeinflusst wird, sondern vorteilhaft nur die Schwingungen in der Netzspannung oberhalb der Grundfrequenz gedämpft und damit vorteilhaft reduziert werden. Ferner bewirkt die Filterung des Netzstromes nach einer Tiefpasscharakteristik, welcher Netzstrom auch eine Schwingung mit der Grundfrequenz bezüglich der Netzspannung enthält, dass die nachfolgende Ausregelung des gefilterten Netzstromes auf den Netzstromsollwert, welcher Netzstromsollwert vorzugsweise nur die Grundfrequenz der Netzspannung aufweist, nur noch den bereits gefilterten Netzstromes auf diesen Netzstromsollwert ausregeln muss, ohne dass Schwingungen oberhalb der Grundfrequenz bezüglich der Netzspannung die Ausregelung negativ beeinflussen. Die Addition der gefilterten Transformatorinduktivitätsspannung und der gefilterten Netzspannung zu der Reglerspannung stellt eine Vorsteuerung für die Ausregelung des gefilterten Netzstromes auf den Netzstromsollwert dar, wodurch die Regelung vorteilhaft stark entlastet werden kann.

Die erfindungsgemässe Vorrichtung zur Durchführung des Verfahrens zum Betrieb der Umrichterschaltung weist eine der Erzeugung des Regelsignals dienende Regelungsvorrichtung auf, die über eine Ansteuerschaltung zur Bildung des Ansteuersignals mit den ansteuerbaren Leistungshalbleiterschaltern verbunden ist. Nach der Erfindung weist die Regelungsvorrichtung einen ersten Filter zur Bildung des gefilterten Netzstromes durch Filterung nach einer Tiefpasscharakteristik des Netzstromes, einen zweites Filter zur Bildung der gefilterten Transformatorinduktivitätsspannung Filterung nach einer Tiefpasscharakteristik der aus dem Netzstrom gebildeten Transformatorinduktivitätsspannung und einen dritten Filter zur Bildung der gefilterten Netzspannung durch Filterung nach einer Tiefpasscharakteristik der Netzspannung auf. Zudem weist die Regelungsvorrichtung eine Summiereinheit zur Bildung des Regelsignal durch Summation der Reglerspannung, der gefilterten Transformatorinduktivitätsspannung und der gefilterten Netzspannung aufweist, wobei die Regelungsvorrichtung eine Reglereinheit zur Bildung der Reglerspannung durch Ausregelung des gefilterten Netzstromes auf den Netzstromsollwert aufweist. Die erfindungsgemässe Vorrichtung zur Durchführung des Verfahrens zum Betrieb der Umrichterschaltung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1 eine Ausführungsform einer Vorrichtung zur Durchführung eines Verfahrens zum Betrieb einer Umrichterschaltung nach dem Stand der Technik,

Fig. 2 eine Ausführungsform einer Regelungsvorrichtung der Vorrichtung zur Durchführung eines Verfahrens nach Fig. 1 nach dem Stand der Technik,

Fig. 3 ein gängiger zeitlicher Verlauf der Netzspannung eines dreiphasigen elektrischen Wechselspannungsnetz,

Fig. 4 eine erfindungsgemässe Ausführungsform einer Regelungsvorrichtung einer erfindungsgemässen Vorrichtung zur Durchführung eines Verfahrens zum Betrieb der Umrichterschaltung,

Fig. 5 ein zeitlicher Verlauf der Netzspannung eines dreiphasigen elektrischen Wechselspannungsnetz nach dem erfindungsgemässen Verfahren zum Betrieb der Umrichterschaltung und

Fig. 6 Bereich einer Eingangsimpedanz Z einer Umrichtereinheit der Umrichterschaltung nach dem erfindungsgemässen Verfahren zum Betrieb der Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugzeichen versehen. Die beschriebenen Ausführungsformen stehen beispielhaft für den Erfindungsgegenstand und haben keine beschränkende Wirkung.

**Wege zur Ausführung der Erfindung**

In Fig. 1 ist, wie eingangs bereist erwähnt, eine Ausführungsform einer Vorrichtung zur Durchführung eines Verfahrens zum Betrieb einer Umrichterschaltung nach dem Stand der Technik gezeigt. Die Umrichterschaltung weist gemäss Fig. 1 eine Umrichtereinheit 2 mit einer Vielzahl an ansteuerbaren Leistungshalbleiterschaltern auf und ist über einen Transformator mit einem dreiphasigen elektrischen Wechselspannungsnetz 1 verbunden. Es sei erwähnt, dass die Umrichtereinheit 1 allgemein als jedwede Umrichtereinheit 1 zur Schaltung von $\geq 2$ Schaltgleichspannungsniveaus (Multi-Level-Umrichterschaltung) ausgebildet sein kann. Das dreiphasige elektrische Wechselspannungsnetz 1 mit einer dreiphasigen Netzspannung, einem dreiphasigen Netzstrom und einer dreiphasigen Transformatorinduktivitätsspannung ist in Fig. 1 der Übersichtlichkeit halber als einphasiges Ersatzschaltbild mit einer einphasigen Netzspannung $u_G$, einem einphasigen Netzstrom $i_G$ und einer einphasigen Transformatorinduktivitätsspannung $u_{LT}$ gezeigt.

Beim erfindungsgemässen Verfahren zum Betrieb der Umrichterschaltung werden die ansteuerbaren Leistungshalbleiterschalter mittels eines aus einem Regelsignal $S_R$ gebildeten Ansteuersignals $S_A$ angesteuert. Erfindungsgemäss wird ein gefilterter Netzstrom $i_{GTP}$ durch Filterung nach einer Tiefpasscharakteristik eines Netzstromes $i_G$, eine gefilterte Transformatorinduktivitätsspannung $u_{LTTP}$ durch Filterung nach einer Tiefpasscharakteristik einer aus dem Netzstrom $i_G$ gebildeten Transformatorinduktivitätsspannung $u_{LT}$ und eine gefilterte Netzspannung $u_{GTP}$ durch Filterung nach einer Tiefpasscharakteristik einer Netzspannung $u_G$ gebildet. Das Regelsignal $S_R$ wird durch Summation einer Reglerspannung $u_R$, der gefilterten Transformatorinduktivitätsspannung $u_{LTTP}$ und der gefilterten Netzspannung $u_{GTP}$ gebildet, wobei die Reglerspannung $u_R$ durch Ausregelung des gefilterten Netzstromes $i_{GTP}$ auf einen Netzstromsollwert $i_{Gref}$ gebildet wird. Durch diese Massnahmen werden Schwingungen in der Netzspannung $u_G$ oberhalb der Grundfrequenz gedämpft und damit vorteilhaft reduziert. Die vorstehend genannten Filterungen nach einer Tiefpasscharakteristik finden insbesondere in einem mit der Grundfrequenz der Netzspannung $u_G$ rotierenden System statt, wobei dann die Grundschwingung der Netzspannung $u_G$ in diesem System als Gleichanteil erscheint, so dass die Grundfrequenz der Netzspannung $u_G$ durch die Filterungen nach einer Tiefpasscharakteristik gemäss dem erfindungsgemässen Verfahren vorteilhaft nicht beeinflusst wird, sondern vorteilhaft nur die Schwingungen in der Netzspannung $u_G$ oberhalb der Grundfrequenz gedämpft und damit vorteilhaft reduziert werden. Ferner bewirkt die Filterung des Netzstromes $i_G$ nach einer Tiefpasscharakteristik, der auch eine Schwingung mit der Grundfrequenz bezüglich der Netzspannung $u_G$ enthält, dass die nachfolgende Ausregelung des gefilterten Netzstromes $i_{GTP}$ auf den Netzstromsollwert $i_{Gref}$, welcher Netzstromsollwert $i_{Gref}$ vorzugsweise nur die Grundfrequenz der Netzspannung $u_G$ aufweist, nur noch den bereits gefilterten Netzstrom $i_{GTP}$ auf diesen Netzstromsollwert $i_{Gref}$ ausregeln muss, ohne dass Schwingungen oberhalb der Grundfrequenz bezüglich der Netzspannung $u_G$ die Ausregelung negativ beeinflussen. Die Addition der gefilterten Transformatorinduktivitätsspannung $u_{LTTP}$ und der gefilterten Netzspannung $u_{GTP}$ zu der Reglerspannung $u_R$ stellt eine Vorsteuerung für die Ausregelung des gefilterten Netzstromes $i_{GTP}$ auf den Netzstromsollwert $i_{Gref}$ dar, wodurch die Regelung mit Vorteil signifikant entlastet werden kann.

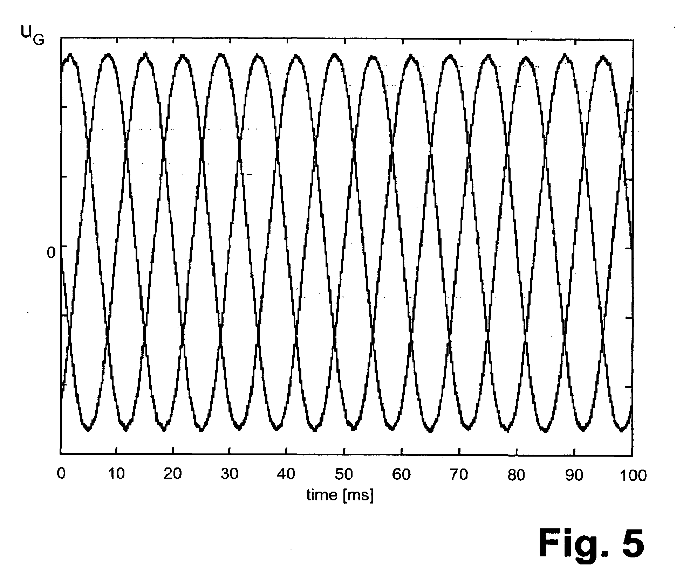

Ein zeitlicher Verlauf der Netzspannung $u_G$ des dreiphasigen elektrischen Wechselspannungsnetzes bei Einsatz des erfindungsgemässen Verfahrens zum Betrieb der Umrichterschaltung ist in Fig. 5 gezeigt, wobei eine deutliche Reduzierung bzw. Dämpfung von unerwünschten Schwingungen der Netzspannung $u_G$ oberhalb der Grundfrequenz erkennbar ist.

Es sei an dieser Stelle ausdrücklich erwähnt, dass auch eine Filterung nach einer Tiefpasscharakteristik von nur einer oder zwei der vorstehend genannten zu filternden Grössen, d.h. beispielsweise eine ausschliessliche Filterung nach einer Tiefpasscharakteristik des Netzstromes $i_G$ oder eine ausschliessliche Filterung nach einer Tiefpasscharakteristik des Netzstrom $i_G$ und der Netzspannung $u_G$ denkbar wäre. Ferner wäre auch eine Band-Stop-Filterung sämtlicher der vorstehend genannten zu filternden Grössen oder eine Band-Stop-Filterung von nur einer oder zwei der vorstehend genannten zu filternden Grössen denkbar. Schliesslich wäre auch jedwede Kombination von Filterung nach einer Tiefpasscharakteristik und Band-Stop-Filterung sämtlicher der vorstehend genannten zu filternden Grössen oder von nur zwei der vorstehend genannten zu filternden Grössen denkbar, d.h. beispielsweise eine ausschliessliche Band-Stop-Filterung des Netzstrom $i_G$ und eine ausschliessliche Filterung nach einer Tiefpasscharakteristik der Netzspannung $u_G$.

Vorzugsweise wird die Transformatorinduktivitätsspannung $u_{LT}$ aus dem Netzstrom $i_G$ und einer Transformatorinduktivität $L_T$ berechnet. Die Berechnung erfolgt nach, folgender Formel:

$$u_{LT} = j\omega L_T \cdot i_G$$

Die Filterungen nach einer Tiefpasscharakteristik erfolgen jeweils mit zweiter Ordnung, wodurch vorteilhaft eine hervorragende Dämpfung und damit Reduzierung der nicht gewollten Schwingungen in der Netzspannung $u_G$ oberhalb der Grundfrequenz erreicht werden kann.

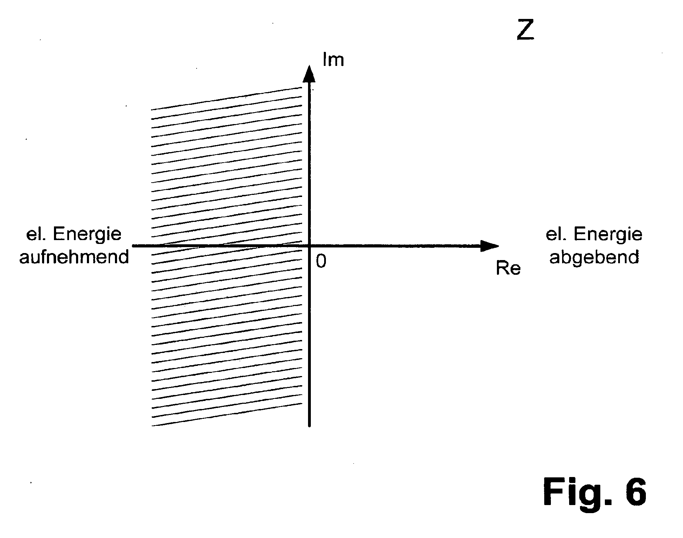

Die Übertragungsfunktionen der Filterungen nach einer Tiefpasscharakteristik werden vorzugsweise derart gewählt, dass die Eingangsimpedanz Z der Umrichtereinheit 2 der Impedanz einer elektrischen Energie aufnehmenden elektrischen Last entspricht. Zur Veranschaulichung ist in Fig. 6 der Bereich der Eingangsimpedanz Z der Umrichtereinheit 2 der Umrichterschaltung, in dem die Eingangsimpedanz Z der Impedanz einer elektrischen Energie aufnehmenden elektrischen Last entspricht, schraffiert dargestellt. Mittels einer derartigen Wahl der Eingangsimpedanz Z kann eine signifikante Verbesserung der Dämpfung und damit der Reduzierung der unerwünschten Schwingungen in der Netzspannung $u_G$ oberhalb der Grundfrequenz erzielt werden.

Die vorstehend bereits erwähnte Ausregelung des gefilterten Netzstromes $i_{GTP}$ auf den Netzstromsollwert $i_{Gref}$ erfolgt vorzugsweise nach einer Proportional-Integral-Charakteristik, da diese sich durch Einfachheit auszeichnet. Alternativ ist es aber auch denkbar, dass die Ausregelung des gefilterten Netzstromes $i_{GTP}$ auf den Netzstromsollwert $i_{Gref}$ nach einer Dead-Beat-Charakteristik mittels Iteration erfolgt. Es sei erwähnt, dass aber auch jedwede andere Regelcharakteristik denkbar wäre.

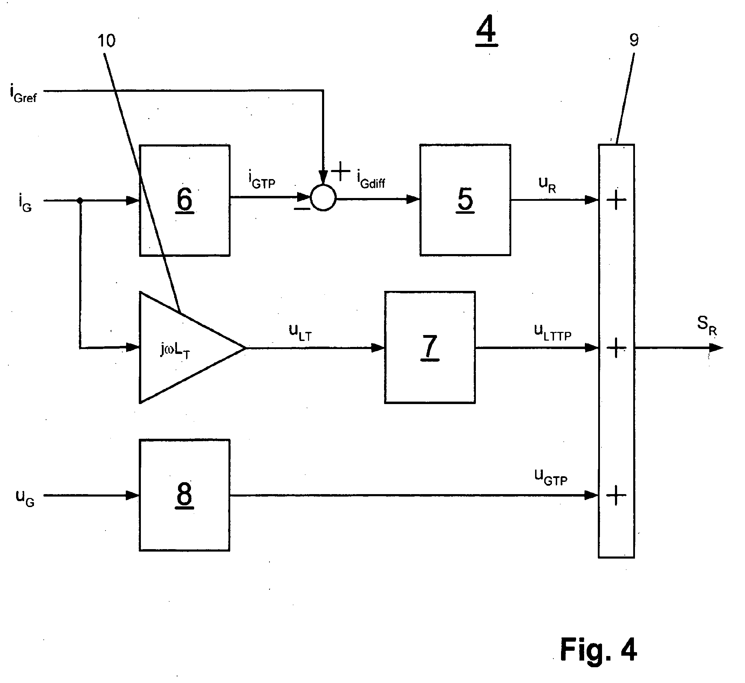

Die Vorrichtung zur Durchführung des Verfahrens weist gemäss Fig. 1 eine der Erzeugung des Regelsignals $S_R$ dienende Regelungsvorrichtung 4 auf, die über eine Ansteuerschaltung 3 zur Bildung des Ansteuersignals $S_A$ mit den ansteuerbaren Leistungshalbleiterschaltern der Umrichtereinheit verbunden ist. In Fig. 4 ist eine erfindungsgemässe Ausführungsform einer Regelungsvorrichtung 4 der erfindungsgemässen Vorrichtung zur Durchführung eines Verfahrens zum Betrieb der Umrichterschaltung gezeigt. Nach der Erfindung weist die Regelungsvorrichtung 4 gemäss Fig. 4 nun einen ersten Filter 6 zur Bildung des gefilterten Netzstromes $i_{GTP}$ durch Filterung nach einer Tiefpasscharakteristik des Netzstromes $i_G$, einen zweiten Filter 7 zur Bildung der gefilterten Transformatorinduktivitätsspannung $u_{LTTP}$ durch Filterung nach einer Tiefpasscharakteristik der aus dem Netzstrom $i_G$ gebildeten Transformatorinduktivitätsspannung ($u_{LT}$) und einen dritten Filter 8 zur Bildung der gefilterten Netzspannung $u_{GTP}$ durch Filterung nach einer Tiefpasscharakteristik der Netzspannung $u_G$ auf. Desweiteren umfasst die Regelungsvorrichtung 4 eine Summiereinheit 9 zur Bildung des Regelsignal $S_R$ durch Summation der Reglerspannung $u_R$, der gefilterten Transformatorinduktivitätsspannung $u_{LTTP}$ und der gefilterten Netzspannung $u_{GTP}$, wobei Regelungsvorrichtung 4 eine Reglereinheit 5 zur Bildung der Reglerspannung $u_R$ durch Ausregelung des gefilterten Netzstromes $i_{GTP}$ auf den Netzstromsollwert $i_{Gref}$ aufweist.

Die Regelungsvorrichtung 4 weist gemäss Fig. 4 ferner eine Berechnungseinheit 10 zur Berechnung der Transformatorinduktivitätsspannung $u_{LT}$ aus dem Netzstrom $i_G$ und einer Transformatorinduktivität $L_T$ auf, wobei die Berechnung dann nach der bereist erwähnten Formel erfolgt.

Vorzugsweise ist der erste, zweite und dritte Filter 6, 7, 8 jeweils ein Tiefpassfilter zweiter Ordnung, d.h. der jeweilige Filter 6, 7, 8 führt die Filterung nach einer Tiefpasscharakteristik der jeweiligen Grösse mit 2. Ordnung aus. Darüber hinaus sind die Übertragungsfunktionen des ersten, zweiten und dritten Filters 6, 7, 8 derart gewählt, dass die Eingangsimpedanz Z der Umrichtereinheit 2 der Impedanz einer elektrischen Energie aufnehmenden elektrischen Last entspricht. In diesem Zusammenhang wird nochmals auf den schraffierten Bereich in Fig. 6 verwiesen, den Bereich zeigt, in dem die Eingangsimpedanz Z der Umrichtereinheit 2 der Impedanz einer elektrischen Energie aufnehmenden elektrischen Last entspricht.

Desweiteren führt die Reglereinheit 5 die Ausregelung des gefilterten Netzstromes $i_{GTP}$ auf den Netzstromsollwert $i_{Gref}$ nach einer Proportional-Integral-Charakteristik durch. Alternativ dazu ist es auch denkbar, dass die Reglereinheit 5 die Ausregelung des gefilterten Netzstromes $i_{GTP}$ auf den Netzstromsollwert $i_{Gref}$ nach einer Dead-Beat-Charakteristik mittels Iteration durchführt.

Sämtliche Schritte des erfindungsgemässen Verfahrens können als Software realisiert werden, wobei diese dann beispielsweise auf ein Computersystem, insbesondere mit einem digitalen Signalprozessor, geladen werden und darauf ablaufen können. Ferner kann die vorstehend detailliert beschriebene erfindungsgemässe Vorrichtung auch in einem Computersystem, insbesondere in einem digitalen Signalprozessor, realisiert sein.

Insgesamt konnte gezeigt werden, dass die, insbesondere in Fig. 4 gezeigte, erfindungsgemässe Vorrichtung zur Durchführung des erfindungsgemässen Verfahrens zum Betrieb der Umrichterschaltung sehr einfach und kostengünstig realisiert werden kann, da der Schaltungsaufwand äusserst gering ist und zudem nur eine geringe Anzahl an Bauelementen für den Aufbau benötigt wird. Somit ist mit dieser Vorrichtung ist das erfindungsgemässe Verfahren besonders einfach durchführbar.

**Bezugszeichenliste**

1    elektrisches Wechselspannungsnetz
2    Umrichtereinheit

3    Ansteuerschaltung
4    Regelungsvorrichtung
5    Reglereinheit
6    erster Filter
7    zweiter Filter
8    dritter Filter
9    Summiereinheit
10    Berechnungseinheit

**Patentansprüche**

1.    Verfahren zum Betrieb einer Umrichterschaltung, wobei die Umrichterschaltung eine Umrichtereinheit (2) mit einer Vielzahl an ansteuerbaren Leistungshalbleiterschaltern aufweist und über einen Transformator mit einem dreiphasigen elektrischen Wechselspannungsnetz (1) verbunden ist,
bei dem die ansteuerbaren Leistungshalbleiterschalter mittels eines aus einem Regelsignal ($S_R$) gebildeten Ansteuersignals ($S_A$) angesteuert werden,
**dadurch gekennzeichnet,**
**dass** ein gefilterter Netzstrom ($i_{GTP}$) durch Filterung nach einer Tiefpasscharakteristik eines Netzstromes ($i_G$) gebildet wird, wobei die Filterung des Netzstromes ($i_G$) in einem mit der Grundfrequenz einer Netzspannung ($u_G$) rotierenden System stattfindet,
**dass** eine gefilterte Transformatorinduktivitätsspannung ($u_{LTTP}$) durch Filterung nach einer Tiefpasscharakteristik einer aus dem Netzstrom ($i_G$) gebildeten Transformatorinduktivitätsspannung ($u_{LT}$) gebildet wird, wobei die Filterung der Transformatorinduktivitätsspannung ($u_{LT}$) in einem mit der Grundfrequenz der Netzspannung ($u_G$) rotierenden System stattfindet,
**dass** eine gefilterte Netzspannung ($u_{GTP}$) durch Filterung nach einer Tiefpasscharakteristik der Netzspannung ($u_G$) gebildet wird, wobei die Filterung der Netzspannung ($u_G$) in einem mit der Grundfrequenz der Netzspannung ($u_G$) rotierenden System stattfindet, und
**dass** das Regelsignal ($S_R$) durch Summation einer Reglerspannung ($u_R$), der gefilterten Transformatorinduktivitätsspannung ($u_{LTTP}$) und der gefilterten Netzspannung ($u_{GTP}$) gebildet wird, wobei die Reglerspannung ($u_R$) durch Ausregelung des gefilterten Netzstromes ($i_{GTP}$) auf einen Netzstromsollwert ($i_{Gref}$) gebildet wird.

2.    Verfahren nach Anspruch 1, **dadurch gekennzeichnet, dass** die Transformatorinduktivitätsspannung ($u_{LT}$) aus dem Netzstrom ($i_G$) und einer Transformatorinduktivität ($L_T$) berechnet wird.

3.    Verfahren nach Anspruch 1 oder 2, **dadurch gekennzeichnet, dass** die Filterungen nach einer Tiefpasscharakteristik jeweils mit zweiter Ordnung erfolgen.

4.    Verfahren nach einem der Ansprüche 1 bis 3, **dadurch gekennzeichnet, dass** die Übertragungsfunktionen der Filterungen nach einer Tiefpasscharakteristik derart gewählt werden, dass die Eingangsimpedanz (Z) der Umrichtereinheit (2) der Impedanz einer elektrische Energie aufnehmenden elektrischen Last entspricht.

5.    Verfahren nach einem der Ansprüche 1 bis 4, **dadurch gekennzeichnet, dass** die Ausregelung des gefilterten Netzstromes ($i_{GTP}$) auf den Netzstromsollwert ($i_{Gref}$) nach einer Proportional-Integral-Charakteristik erfolgt.

6.    Verfahren nach einem der Ansprüche 1 bis 4, **dadurch gekennzeichnet, dass** die Ausregelung des gefilterten Netzstromes ($i_{GTP}$) auf den Netzstromsollwert ($i_{Gref}$) nach einer Dead-Beat-Charakteristik mittels Iteration erfolgt.

7.    Vorrichtung zur Durchführung eines Verfahrens zum Betrieb einer Umrichterschaltung, wobei die Umrichterschaltung eine Umrichtereinheit (2) mit einer Vielzahl an ansteuerbaren Leistungshalbleiterschaltern aufweist und über einen Transformator mit einem dreiphasigen elektrischen Wechselspannungsnetz (1) verbunden ist,
mit einer der Erzeugung eines Regelsignals ($S_R$) dienenden Regelungsvorrichtung (4), die über eine Ansteuerschaltung (3) zur Bildung eines Ansteuersignals ($S_A$) mit den ansteuerbaren Leistungshalbleiterschaltern verbunden ist,
**dadurch gekennzeichnet,**
**dass** die Regelungsvorrichtung (4) einen ersten Filter (6) zur Bildung eines gefilterten Netzstromes ($i_{GTP}$) durch Filterung nach einer Tiefpasscharakteristik eines Netzstromes ($i_G$) aufweist, wobei die Filterung des Netzstromes ($i_G$) im ersten Filter (6) in einem mit der Grundfrequenz einer Netzspannung ($u_G$) rotierenden System stattfindet,
**dass** die Regelungsvorrichtung (4) einen zweiten Filter (7) zur Bildung einer gefilterten Transformatorinduktivitätsspannung ($u_{LTTP}$) durch Filterung nach einer Tiefpasscharakteristik einer aus dem Netzstrom ($i_G$) gebildeten Transformatorinduktivitätsspannung ($u_{LT}$) aufweist, wobei die Filterung der Transformatorinduktivitätsspannung ($u_{LT}$) im zweiten Filter (7) in einem mit der Grundfrequenz der Netzspannung ($u_G$) rotierenden System stattfindet, **dass** die Regelungsvorrichtung (4) einen dritten Filter (8) zur Bildung einer gefilterten Netzspannung ($u_{GTP}$) durch Filterung nach einer Tiefpasscharakteristik der Netzspannung ($u_G$) aufweist, wobei die Filterung der Netzspannung ($u_G$) im dritten Filter (8) in einem mit der Grundfrequenz der Netzspannung ($u_G$) rotierenden System stattfindet, und **dass** die Regelungsvorrichtung (4) eine Summiereinheit (9) zur Bildung des Regelsignal ($S_R$) durch Summation einer Reglerspannung ($u_R$), der gefilterten Transformatorinduktivitätsspannung ($u_{LTTP}$) und der gefilterten Netzspannung ($u_{GTP}$) aufweist, wobei Regelungsvorrichtung (4) eine Reglereinheit (5) zur Bildung der Reglerspannung ($u_R$) durch Ausregelung des gefilterten Netzstromes ($i_{GTP}$) auf einen Netzstromsollwert ($i_{Gref}$) aufweist.

8. Vorrichtung nach Anspruch 7, **dadurch gekennzeichnet, dass** die Regelungsvorrichtung (4) eine Berechnungseinheit (10) zur Berechnung der Transformatorinduktivitätsspannung ($u_{LT}$) aus dem Netzstrom ($i_G$) und einer Transformatorinduktivität ($L_T$) aufweist.

9. Vorrichtung nach Anspruch 7 oder 8, **dadurch gekennzeichnet, dass** die der erste, zweite und dritte Filter (6, 7, 8) jeweils ein Tiefpassfilter zweiter Ordnung ist.

10. Vorrichtung nach einem der Ansprüche 7 bis 9, **dadurch gekennzeichnet, dass** die Übertragungsfunktionen des ersten, zweiten und dritten Filters (6, 7, 8) derart gewählt sind, dass die Eingangsimpedanz (Z) der Umrichtereinheit (2) der Impedanz einer elektrischen Energie aufnehmenden elektrischen Last entspricht.

11. Vorrichtung nach einem der Ansprüche 7 bis 10, **dadurch gekennzeichnet, dass** die Reglereinheit (5) die Ausregelung des gefilterten Netzstromes ($i_{GTP}$) auf den Netzstromsollwert ($i_{Gref}$) nach einer Proportional-Integral-Charakteristik durchführt.

12. Vorrichtung nach einem der Ansprüche 7 bis 10, **dadurch gekennzeichnet, dass** die Reglereinheit (5) die Ausregelung des gefilterten Netzstromes ($i_{GTP}$) auf den Netzstromsollwert ($i_{Gref}$) nach einer Dead-Beat-Charakteristik mittels Iteration durchführt.

**Claims**

1. Method for operation of a converter circuit, with the converter circuit having a converter unit (2) with a multiplicity of controllable power semiconductor switches, and being connected via a transformer to a three-phase electrical AC voltage power supply system (1),
   in which the controllable power semiconductor switches are controlled by means of a control signal ($S_A$) which is formed from a regulating signal ($S_R$), **characterized**
   **in that** a filtered power supply system current ($i_{GTP}$) is formed by filtering a power supply system current ($i_G$) using a low-pass filter characteristic,
   **in that** a filtered transformer inductance voltage ($u_{LTTP}$) is formed by filtering a transformer inductance voltage ($u_{LT}$), which is formed from the power supply system current ($i_G$), using a low-pass filter characteristic,
   **in that** a filtered power supply system voltage ($u_{GTP}$) is formed by filtering a power supply system voltage ($u_G$) using a low-pass filter characteristic, and
   **in that** the regulating signal ($S_R$) is formed by addition of a regulator voltage ($u_R$), the filtered transformer inductance voltage ($u_{LTTP}$) and the filtered power supply system voltage ($u_{GTP}$), with the regulator voltage ($u_R$) being formed by regulating the filtered power supply system current ($i_{GTP}$) at a power supply system current nominal value ($i_{Gref}$).

2. Method according to Claim 1, **characterized in that** the transformer inductance voltage ($u_{LT}$) is calculated from the power supply system current ($i_G$) and a transformer inductance ($L_T$).

3. Method according to Claim 1 or 2, **characterized in that** the filtering processes are each carried out with a second order, using a low-pass filter characteristic.

4. Method according to one of Claims 1 to 3, **characterized in that** the transfer functions of the filtering processes are chosen using a low-pass filter characteristic, such that the input impedance (Z) of the converter unit (2) corresponds to the impedance of an electrical load which consumes electrical energy.

5. Method according to one of Claims 1 to 4, **characterized in that** the filtered power supply system current ($i_{GTP}$) is regulated at the power supply system current nominal value ($i_{Gref}$) using a proportional-integral characteristic.

6. Method according to one of Claims 1 to 4, **characterized in that** the filtered power supply system current ($i_{GTP}$) is regulated at the power supply system current nominal value ($i_{Gref}$) using a dead-beat characteristic, by means of iteration.

7. Apparatus for carrying out a method for operation of a converter circuit, with the converter circuit having a converter unit (2) with a multiplicity of controllable power semiconductor switches, and being connected via a transformer to a three-phase electrical AC voltage power supply system (1), having a regulating apparatus (4), which is used to produce a regulating signal ($S_R$) and is connected via a control circuit (3) for forming a control signal ($S_A$) to the controllable power semiconductor switches,
**characterized**
**in that** the regulating apparatus (4) has a first filter (6) for forming a filtered power supply system current ($i_{GTP}$) by filtering a power supply system current ($i_G$) using a low-pass filter characteristic,
**in that** the regulating apparatus (4) has a second filter (7) for forming a filtered transformer inductance voltage ($u_{LTTP}$) by filtering a transformer inductance voltage ($u_{LT}$), which is formed from the power supply system current ($i_G$), using a low-pass filter characteristic,
**in that** the regulating apparatus (4) has a third filter (8) for forming a filtered power supply system voltage ($u_{GTP}$) by filtering a power supply system voltage ($u_G$) using a low-pass filter characteristic, and
**in that** the regulating apparatus (4) has an addition unit (9) for formation of the regulating signal ($S_R$) by addition of a regulator voltage ($u_R$), the filtered transformer inductance voltage ($u_{LTTP}$) and the filtered power supply system voltage ($u_{GTP}$), with the regulating apparatus (4) having a regulator unit (5) for formation of the regulator voltage ($u_R$) by regulating the filtered power supply system current ($i_{GTP}$) at a power supply system current nominal value ($i_{Gref}$).

8. Apparatus according to Claim 7, **characterized in that** the regulating apparatus (4) has a calculation unit (10) for calculation of the transformer inductance voltage ($u_{LT}$) from the power supply system current ($i_G$) and a transformer inductance ($L_T$).

9. Apparatus according to Claim 7 or 8, **characterized in that** the first, second and third filters (6, 7, 8) are each second-order low-pass filters.

10. Apparatus according to one of Claims 7 to 9, **characterized in that** the transfer functions of the first, second and third filters (6, 7, 8) are chosen such that the input impedance (Z) of the converter unit (2) corresponds to the impedance of an electrical load which consumes electrical energy.

11. Apparatus according to one of Claims 7 to 10, **characterized in that** the regulator unit (5) regulates the filtered power supply system current ($i_{GTP}$) at the power supply system current nominal value ($i_{Gref}$) using a proportional-integral characteristic.

12. Apparatus according to one of Claims 7 to 10, **characterized in that** the regulator unit (5) regulates the filtered power supply system current ($i_{GTP}$) at the power supply system current nominal value ($i_{Gref}$) using a dead-beat characteristic, by means of iteration.

**Revendications**

1. Procédé pour faire fonctionner un circuit convertisseur, dans lequel le circuit convertisseur présente une unité de convertisseur (2) avec une pluralité de commutateurs à semi-conducteur de puissance commandables et est relié, via un transformateur, à un réseau électrique triphasé de tension alternative (1),
avec lequel les commutateurs à semi-conducteur de puissance commandables sont commandés au moyen d'un signal de commande ($S_A$) formé à partir un signal de régulation ($S_R$),
**caractérisé**
**en ce qu'**un courant de réseau filtré ($i_{GTP}$) est formé par filtrage selon une caractéristique de filtre passe-bas d'un courant de réseau ($i_G$),
**en ce qu'**une tension d'inductance de transformateur filtrée ($u_{LTTP}$) est formée par filtrage selon une caractéristique de filtre passe-bas d'une tension d'inductance de transformateur ($u_{LT}$),

**en ce qu'**une tension de réseau filtrée ($u_{GTP}$) est formée par filtrage selon une caractéristique de filtre passe-bas d'une tension de réseau ($u_G$), et en ce que le signal de régulation ($S_R$) est formé par addition d'une tension de régulateur ($u_R$), de la tension d'inductance de transformateur filtrée ($u_{LTTP}$) et de la tension de réseau filtrée ($u_{GTP}$), dans lequel la tension de régulateur ($u_R$) est formée par réglage parfait du courant de réseau filtré ($i_{GTP}$) à une valeur de consigne de courant de réseau ($i_{Gref}$).

2. Procédé selon la revendication 1, **caractérisé en ce que** la tension d'inductance de transformateur ($u_{LT}$) est calculée à partir du courant de réseau ($i_G$) et d'une inductance de transformateur ($L_T$).

3. Procédé selon la revendication 1 ou 2, **caractérisé en ce que** les filtrages s'effectuent selon une caractéristique de filtre passe-bas respectivement du second ordre.

4. Procédé selon l'une des revendications 1 à 3, **caractérisé en ce que** les fonctions de transfert des filtrages sont choisies selon une caractéristique de filtre passe-bas de manière à ce que l'impédance d'entrée ($Z$) de l'unité de convertisseur (2) corresponde à l'impédance d'une charge électrique absorbant de l'énergie électrique.

5. Procédé selon l'une des revendications 1 à 4, **caractérisé en ce que** le réglage parfait du courant de réseau filtré ($i_{GTP}$) à la valeur de consigne de courant de réseau ($i_{Gref}$) s'effectue selon une caractéristique proportionnelle-intégrale.

6. Procédé selon l'une des revendications 1 à 4, **caractérisé en ce que** le réglage parfait du courant de réseau filtré ($i_{GTP}$) à la valeur de consigne de courant de réseau ($i_{Gref}$) s'effectue selon une caractéristique dead-beat au moyen d'une itération.

7. Dispositif pour exécuter un procédé pour faire fonctionner un circuit convertisseur, dans lequel le circuit convertisseur présente une unité de convertisseur (2) avec une pluralité de commutateurs à semi-conducteur de puissance commandables et est relié, via un transformateur, à un réseau électrique triphasé de tension alternative (1), avec un dispositif de régulation (4) servant à la génération d'un signal de régulation ($S_R$), lequel est relié via un circuit de commande (3) pour la formation d'un signal de commande ($S_A$) aux commutateurs à semi-conducteur de puissance commandables,
**caractérisé**
**en ce que** le dispositif de régulation (4) présente un premier filtre (6) pour la formation d'un courant de réseau filtré ($i_{GTP}$) par filtrage selon une caractéristique de filtre passe-bas d'un courant de réseau ($i_G$), en ce que le dispositif de régulation (4) présente un deuxième filtre (7) pour la formation d'une tension d'inductance de transformateur filtrée ($u_{LTTP}$) par filtrage selon une caractéristique de filtre passe-bas d'une tension d'inductance de transformateur ($u_{LT}$) formée à partir du courant de réseau ($i_G$), en ce que le dispositif de régulation (4) présente un troisième filtre (8) pour la formation d'une tension de réseau filtrée ($u_{GTP}$) par filtrage selon une caractéristique de filtre passe-bas d'une tension de réseau ($u_G$), et
**en ce que** le dispositif de régulation(4) présente une unité d'addition (9) pour la formation du signal de régulation ($S_R$) par addition d'une tension de régulateur ($u_R$), de la tension d'inductance de transformateur filtrée ($u_{LTTP}$) et de la tension de réseau filtrée ($u_{GTP}$), dans lequel le dispositif de régulation (4) présente une unité de régulateur (5) pour la formation de la tension de régulateur ($u_R$) par réglage parfait du courant de réseau filtré ($i_{GTP}$) à une valeur de consigne de courant de réseau ($i_{Gref}$).

8. Dispositif selon la revendication 7, **caractérisé en ce que** le dispositif de régulation (4) présente une unité de calcul (10) pour le calcul de la tension d'inductance de transformateur ($u_{LTP}$) à partir du courant de réseau ($i_G$) et d'une inductance de transformateur ($L_T$).

9. Dispositif selon la revendication 7 ou 8, **caractérisé en ce que** les premier, deuxième et troisième filtres (6, 7, 8) sont respectivement un filtre passe-bas du second ordre.

10. Dispositif selon l'une des revendications 7 à 9, **caractérisé en ce que** les fonctions de transfert des premier, deuxième et troisième filtres (6, 7, 8) sont choisies de manière à ce que l'impédance d'entrée ($Z$) de l'unité de convertisseur (2) corresponde à l'impédance d'une charge électrique absorbant de l'énergie électrique.

11. Dispositif selon l'une des revendications 7 à 10, **caractérisé en ce que** l'unité de régulateur (5) exécute le réglage parfait du courant de réseau filtré ($i_{GTP}$) à la valeur de consigne de courant de réseau ($i_{Gref}$) selon une caractéristique proportionnelle-intégrale.

**12.** Dispositif selon l'une des revendications 7 à 10, **caractérisé en ce que** l'unité de régulateur (5) exécute le réglage parfait du courant de réseau filtré ($i_{GTP}$) à la valeur de consigne de courant de réseau ($i_{Gref}$) selon une caractéristique dead-beat au moyen d'une itération.

Stand der Technik

**Fig. 1**

Stand der Technik

**Fig. 2**

Stand der Technik

Fig. 3

Fig. 4

**Fig. 5**

Z

Im

el. Energie
aufnehmend

0

Re

el. Energie
abgebend

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Y. LIA ; F.L. LUO.** Trinary hybrid multilevel inverter used in STATCOM with unbalanced voltages. *IEE Proc. Electr. Power Appl.,* September 2005, vol. 152 (5